# EUROPEAN PATENT APPLICATION

(11) **EP 4 310 002 A1**
(43) Date of publication of application: **24.01.2024**
(21) Application number: 22771844.2
(22) Date of filing: 04.02.2022
(51) Int. Cl.: B64C 27/18, F02K 7/02

(54) **METHOD FOR DRIVING A ROTOR WITH THE AID OF A JET ENGINE**

(30) Priority: 15.03.2021 RU 2021106684
(71) Applicant: Obshchestvo S Ogranichennoj Otvetstvennost'yu "Vasp Ejrkraft", Moscow, 123154 (RU)
(72) Inventor: BORMOTOV, Andrej Gennad'evich, selo Malaya Laya, 622904 (RU); PLESHKOV, Dmitrij Vasil'evich, Moscow, 123154 (RU); SHISHOV, Aleksandr Valer'evich, Bykovo, 140150 (RU)
(74) Representative: Verdecchia, Valerio
(86) International application number: PCT/RU2022/050034
(87) International publication number: WO 2022/197211

(57) **Abstract**

Rotor systems are driven by jet engines arranged at the tip of a rotor that includes a structure that turns on a rotational axis. A jet stream generated by a jet engine produces a thrust force orthogonal to a rotor radius to motivate rotation. Methods presented include those which take advantage of the intrinsic centrifugal forces present in the rotor to convey gaseous fuel to the engine. Liquefied fuel from a source reservoir is evaporated into a gaseous state and made subject to centrifugal force causing it to move radially outward to a detonation type jet engine. These methods further include special process for mixing fuel with oxidizer and treating fuel or/ and fuel mixtures to improve their detonation capacity.

## Description

### BACKGROUND OF INVENTION

### Technical field

The invention primarily relates to the field of jet driven rotors by converting chemical energy of a fuel into rotational kinetic energy of a rotor and more especially to methods of operation of jet driven rotors by pulse detonation engine or engines located at the tips of a rotor system.

### State of the art

Methods for propulsion of rotor rotation by jet have been developed since the early 20th century. The main application of these methods is the use of rotors as propulsive propeller for aircraft. These were mainly vehicles flying in a helicopter scheme. In this case, the jet thrust source is placed at the end of the rotor and, due to the jet thrust generated by it, rotated the rotor. This approach offers many advantages over the method of rotation of a rotor by attached rotating shaft. The internal combustion engine and transmission are used to rotate the shaft. In this case, a reactive moment arises, which rotates the aircraft in the direction opposite to the direction of rotation of the rotor. This moment needs to be compensated for, which is done in various ways, in particular with the tail rotor, which further complicates the transmission design. The weight of the internal combustion engine and transmission is over 100 kg and depends on the propeller size and the weight of the aircraft.

The Austrian engineer Ludwig Wittgenstein proposed a method in which gas and air are fed through the rotor blade into the combustion chamber at its tip, mix there and, due to centrifugal forces, are heated to such an extent that they ignite. However, in practice, this method was not implemented, because the ignition temperature of a mixture of hydrocarbon gas or hydrogen and air is from 400 to 600 degrees C and it can be reached at a pressure of more than 30 atm, which requires very large centrifugal forces. With the variability of the rotor speed, it is impossible to make such a process reliable.

Another solution to the jet drive of the rotor was the use of a cold jet discharge from a nozzle at the tip of the rotor. For example, using a gas turbine engine that pumps air into an air conduit located inside the rotor. The compressor weighs 90 kg and with 110 kg of kerosene consumption per hour, the overall efficiency of this method is low.

A jet engine located at the tip of the rotor was used as a solution for the method of rotor rotation as the simplest device and the minimum weight of the power plant.

In one example of such tip-jet engine, a ramjet type engine with a weight of about 5-8 kg was used. This method has several problems:
- it works effectively only at a certain range of rotor speed, which provides a sufficient level of compression of the air entering the engine, but at the same time did not allow the air flow to break off the blade, which significantly reduced the lifting force of the rotor (this limitation did not allow the ramjet to work effectively due to subsonic speeds of the rotor tip)
- the products of combustion after the exhaust enter the air intake during the rotation of the rotor, which reduces the efficiency of the ramjet engine
- the weight of the ramjet engine under the action of centrifugal forces in the region of 200 g makes the requirements for the strength of the rotor structure very high
- due to the action of centrifugal mixture of liquid fuel and air in the combustion chamber of the high-pressure jet engine, due to the difference in the density of the components, it stratifies, which reduces the combustion efficiency
- in the event of engine failure, their resistance to the oncoming flow made it difficult to land on autorotation
- high noise level during the operation of the ramjet engine

To create the required thrust, a deflagration jet engine requires supersonic flow rates of a significant volume of air and fuel. This is due to the low efficiency of the thermodynamic cycle of such combustion and the low rate of outflow of combustion products.

Attempts were made whereby more efficient jet engine configurations were used. The most efficient jet engine is a turbojet engine. However, an attempt to use it turned out to be unsuccessful due to the fact that the weight and dimensions of such an engine are significant, provided that it operates at the tip of the rotor under the action of centrifugal forces. In addition, the rotating turbine and compressor created gyroscopic moments, which were either compensated by the flywheels, which further increased the weight and reduced the efficiency of this method, or were transferred to the rotor bearing structures and significantly reduced the resource of the entire system.

The efficiency of jet engines having detonation type combustion operational modes are 13-15% higher than that of a ramjet engine. In this case, detonation combustion requires a smaller combustion chamber and nozzle, because the power of heat release during detonation combustion is much higher than during deflagration combustion and the velocity of detonation products is 20-25 times higher than the velocity of deflagration combustion products. As a result, the weight and dimensions of the detonation engine are much less than that of the ramjet engine, which is very important when operating under the influence of significant centrifugal forces. Detonation combustion provides a greater completeness of fuel combustion than deflagration combustion, due to the higher (supersonic) velocity of propagation of the detonation wave, in contrast to the low (subsonic) velocity of the deflagration front. All these factors together provide a significant advantage of the use of detonation jet engines in comparison with a high-pressure jet engine as a jet drive of the rotor. However, the methods of creating detonation combustion require complex steps to increase the detonation ability of the fuel and the mixture of fuel and oxidizer and the organization of the detonation combustion itself, which may require additional energy consumption.

The invention is known in which a method of working process arrangement in pulse-detonation traction module for jet helicopter, arranged on end of a rotor blade [RU 2718726, C2, B64C 27/18, 14.04.2020], including fuel supply, mixing fuel with air, filling combustion chamber with combustible mixture, occurrence of detonation wave, expansion of detonation products in burner circuit and outflow of detonation products through nozzle for creation of reactive thrust. Liquid fuel is supplied to cylindrical hot inner walls cyclically in form of jets, wherein the jets are oriented so that the hot combustion chamber inner walls are wetted with liquid fuel evenly taking into account the centrifugal forces action direction.

As a result of the liquid fuel jets with the combustion walls inner combustion walls thermo mechanical interaction the jets fragmentation takes place to form droplets and liquid fuel films, as well as fuel vapors providing formation of detonation capable two-phase combustible mixture filling the burner path. Forced ignition of combustible mixture leads to formation in burner channel of accelerating turbulent flame and to fast transition of combustion to detonation, so that all remaining in burner path two phase combustible mixture is burnt in detonation wave, running towards nozzle, and after its outlet from the nozzle, the detonation products flow through the nozzle, accompanied by the pressure decrease in the burner circuit to the braking pressure level in the incoming air flow, thereby providing conditions for the burner circuit blow down and its repeated filling with the detonation capable two-phase fuel and air mixture, and detonation products flowing from nozzle create reactive thrust.

The disadvantage of this known technical solution is the relatively low efficiency of detonation combustion, since the use of a two-phase detonation capable fuel and air mixture leads to:
- reducing the efficiency of fuel pyrolysis;
- stratification of the fuel and air mixture under the action of centrifugal forces;
- incomplete detonation combustion.

In addition, in the known method, additional energy costs are required to provide the required fuel pressure in the engine to obtain a mixture of fuel and oxidizer with a maximum knocking ability, which also leads to a decrease in the overall efficiency of this method of rotor operation.

The closest in technical essence to the proposed method is a device - a useful model of propulsion system [RU 95035, U1, F02K1/00, 08.02.2010], which implements the corresponding method of system operation. The propulsion system consists of at least one blade attached to the axis of the rotor containing the inlet and the ramjet air duct for centrifugal air injection, located in series after the inlet. The combustion chamber and the jet nozzle of the propulsion module are located on the tip of the blade. The inlet of the ramjet is located on the butt of the blade, in which a through channel is made along its entire length, which performs the function of a radial centrifugal air duct and is equipped with a cryogenic fuel evaporator located in the through channel of the blade along its entire length.

The disadvantage of this closest method is the relatively low efficiency of the method of operating a jet engine using deflagration combustion, which leads to a relatively low overall efficiency of this method of rotor rotation.

### BACKGRUOND OF INVENSTION

### Subject matter of invention

The technical objective of the invention is to increase the efficiency of jet driven rotor systems which can be used as propulsion propeller for aircraft or as driver of shaft of electrical generator.

The technical results of the invention include increasing efficiency of operation of a jet driven rotor by reduction of energy consumption for preparation of a mixture of fuel and oxidizer for combustion.

Highly efficient methods of driving rotor rotation using a jet stream include a primary step of converting the chemical energy of a fuel into rotational kinetic energy by detonation combustion in a combustion chamber of a detonation jet engine located at the tip of a rotor system. For this purpose, a gaseous fuel and a gaseous oxidizer are mixed by particular process, and supplied to the engine. These methods include many unique aspects, primary among them are groups of steps for the preparation of fuel and oxidizer, including the step of injecting gaseous fuel and oxidizer into a jet engine by the centrifugal force generated by rotor rotation, and therefollowing, mixing a detonatable mixture, with the step of detonating the mixture of gaseous fuel and oxidizer in the combustion chamber of the detonation jet engine. The jet engine being located at the tip of a rotor system with a tangential jet stream output provides for a highly efficient jet driven rotor. These methods are used for various combinations of fuels and oxidizers and designs of detonation jet engines.

### SUMMARY OF INVENTION

Methods for driving rotor rotation with detonation type jet engines are described and presented. Specifically, detonation type jet engines disposed at the tips of a rotor benefit from centrifugal pumping of fuel naturally generated via rotor rotation to feed detonation reaction in a combustion chamber oriented to produce thrust forces of jet stream that motivate rotor rotation. A fuel source is coupled to a jet engine or engines at the rotor tips by way of a conveyance means that is routed from near the rotor axis toward the rotor tip and integrated with rotor. Fuel from the source is naturally pressurized by the centrifugal forces and it may be further conditioned to improve its detonation capacity prior mixing and / or after mixing with oxidizer. Jet engines used for these methods are specifically designed with respect to the cooperation with rotor speed and fuel pressure generated by centrifugal forces and the detonation properties of the fuel used. These methods include mixing the fuel with an oxidizer to produce a detonatable mixture, detonating the mixture to produce a jet stream that effectively drives rotor rotation.

Variations include: alternative mechanical arrangements to adjust for various fuel types, alternative mechanical means for supplying oxidizer particularly oxidizer from environmental air, rotor design lengths and rotational speed ranges, alternative mechanical means for fuel treating in order to increase its detonation capacity, alternative mechanical means for increasing the detonation ability of a mixture of fuel and oxidizer, among others.

The rotor speed in these methods is controlled by manipulation of the fuel feed rate, which affects the ratio of fuel and oxidizer in the combustion space of the detonation jet engine and its thrust.

The methods are cyclic and closed, which makes it possible to obtain continuous rotation of the rotor with a controlled rotation speed.

### BRIEF DESCRIPTION OF THE DRAWING FIGURES

FIG. 1 shows the main steps of method for driving rotor rotation with detonation type jet engines.
FIG. 2 shows the steps of preferred embodiment of method for driving rotor rotation with detonation type jet engines.
FIG. 3 shows cross-section of blade of rotor which used as propeller of aircraft.

The reference numbers in the figures indicate: 101 - conveying of gaseous fuel via centrifugal forces, 102 - mixing of gaseous fuel and oxidizer, 103 - detonating of fuel and oxidizer mixture, 104 - rotating of rotor by thrust force of jet stream, 105 - supplying of fuel, 106 - supplying of gaseous oxidizer, 200 - treating of gaseous fuel and oxidizer mixture for increasing detonation capacity, 201 - evaporation of liquefied fuel to gaseous state, 202 - conveying of gaseous fuel via centrifugal forces, 203 - treating of gaseous fuel by pyrolysis by contact with source of heat, 204 - mixing of fuel and oxidizer in mix chamber, 205 - detonation of fuel and oxidizer mixture in combustion chamber, 206 - forming jet stream of detonation products, 207 - rotating of rotor by thrust force of jet stream, 208 - supplying of liquefied gaseous fuel with control of feeding rate, 209 - conveying of oxidizer via centrifugal forces, 210 - intake of air as oxidizer, 211 - cooling of oxidizer, 212 - heat transferring, 213 - increasing of kinetic energy of fuel and oxidizer mixture, 214 - excitation of fuel and oxidizer mixture by low pressure wave, 215 - excitation of fuel and oxidizer mixture by detonation initiator, 300 - blade of rotor which is used as propeller, 301- air conveyance path, 302 - fuel conveyance path, 303 - fins for heat transferring

### DETAILED DESCRIPTION OF INVENTION

This disclosure describes operational methods of jet driven rotor systems. In particular, rotors that are driven by a jet stream output from a detonation type jet engine positioned at a rotor tip with the jet stream output substantially orthogonal to the rotor radius. These methods are distinct in several ways including special processes related to preparing fuel as it is conveyed to the jet engine. Integrated with rotors of these systems are conveyance means that subject gaseous fuel passing therethrough to centrifugal forces generated by rotation of the rotor. These forces act upon gaseous fuel to motivate it towards the engine combustion space inside combustion chamber.

Gaseous fuel and oxidizer being conveyed separately finally are brought together in a mixing step that precisely produces a mixture that is detonatable.

After mixing of gaseous fuel and oxidizer into a detonatable mixture, the detonatable mixture is injected into a combustion space where it is detonated.

Detonation products are then mechanically manipulated via structural elements to form a highly directional jet stream exhaust of the engine.

The jet stream produces a reactionary force that causes the rotor system to rotate.

The primary steps of jet driven rotor operation methods of these inventions are as follows:
- Conveying gaseous fuel via centrifugal force of a rotating rotor towards a combustion space;
- Detonating the gaseous fuel and oxidizer mixture to form jet stream; and
- Rotating the rotor by thrust force of the jet stream.

Because detonation occurs as a fast process followed by quick expansion of gases to form the jet stream, stable detonation process produces a steady state or continuous jet output.

These methods are distinct from any prior attempts to produce similar jet engines in that gaseous fuel is subject to compression forces generated by the rotor as centrifugal force that operates on the gas as it passes radially outward along the rotor radius in a fuel conveyance system that delivers fuel to a mixing space in which fuel and oxidizer are mixed.

Unlike a jet engine using deflagration combustion having very high combustion chamber pressure and need for high pressure injection of fuel and oxidizer, a pulse detonation engine allows injection of combustible mixture at a comparatively low pressure, and a pressure that is compatible and cooperative with respect to pressure levels that can be generated by centrifugal acceleration of gases at chosen design parameters. It is further distinctive that these new methods of using jet engines for rotor rotation do not require other means, particularly those means that consume energy, to prepare and condition fuel or oxidizer prior to being injected into the combustion space.

Additionally, the detonation engine has higher efficiency than engine with deflagration combustion. This enables use of relatively smaller and lighter engines to achieve the same level of performance. Small size and light weight of engine, which is located at the tip of the rotor, minimize centrifugal force which is acting on engine and allows more robust and reliable design of jet driven rotor.

### 1) Conveying gaseous fuel via centrifugal force

In a first step of these methods, gaseous fuel is conveyed from a fuel source to a mixing space via centrifugal force of a rotating rotor.

Rotors of these systems are formed to include gas conveyance means. In particular, these rotors include at least one hollow cavity formed with the rotor structure, the hollow cavity being suitable for transmitting gaseous matter therethrough. Some preferred versions include two separate and distinct paths, one each for fuel and oxidizer. Gas injected into the rotor cavity is subject to centrifugal forces that cause the gas to pass through the cavity radially outward towards the rotor tip. As gas molecules move toward the tip, they are subject to even greater force and the gas is compressed and the pressure increased.

With carefully chosen design parameters with particular regard to the rotor length and rotational speed, the gaseous fuel pressure can be made to reach a level that is cooperative with a mixing or/and injection system that further transmits the gases into the combustion space. The pressure level of gaseous fuel at the entrance to the detonation engine is important when it helps to increase the detonation capacity of the fuel and oxidizer mixture, to provide optimum ratio of fuel and oxidizer in mixture and the volume of this mixture required in combustion space for engine operation. It depends on the design of the detonation engine and methods of operation. If the rotor is used as a driver of the shaft of an electric generator, then its speed is determined by the strength characteristics of the design of the rotor and the tip jet engine, which must withstand centrifugal force, as well as the efficiency of the jet drive.

If the rotor is used as a propeller for an aircraft, the efficiency of the rotor is determined by the design of the propeller, in particular by its dimensions, blade shape, blade angle of attack and propeller rotation speed. In this case, the rotor speed is limited, on the one hand, by the requirement to create a maximum centrifugal force for pumping gaseous fuel into the tip jet engine, and, on the other hand, by the limit of the blade speed in the air flow to prevent air flow disruption. Therefore, an appropriate maximum effective speed is selected, taking into account all these limits and aspects, and, if possible, it is kept stable. In this case, the control of the engine efficiency of the rotor is carried out by changing the angle of attack of the blade and the corresponding reactive thrust to maintain the optimal rotation speed.

There are several options for placing the fuel source. It can be located directly in the rotor. Then the volume and weight of the fuel tank are limited by the design of the rotor and the requirements for its performance. The best option is to place the fuel tank in a fixed part of the system. In this case, the fuel must enter the rotor through a fuel line to the place where the rotor is attached to the rotor axis of rotation.

There are various modes in which fuel may be supplied from a source to the engine. For example, in some versions where a liquefied fuel is stored in a fuel reservoir or fuel tank, fuel may be introduced to a conveyance space in an evaporation process whereby the liquid fuel is converted into a gaseous state and injected into an enclosed space under centrifugal force, i.e. in a rotor core or interior tube. It is additionally possible to affix a gas conveyance tube to the external portion of the rotor. In both cases, centrifugal forces operate on the gas in the conveyance space causing it to accelerate radially outward and increase the gas pressure as it arrives at the engine.

In alternative versions, a fuel storage system may simply include gaseous fuel maintained under pressure and that pressure can be used to motivate fuel already in a gaseous state into a fuel conveyance means of the rotor where it is subject to centrifugal forces before passing to the tip of rotor. In both cases, gaseous fuel is introduced from the source to fuel conveyance means of the rotor.

In view of cost reduction with regard to fuel storage, it is a preferred version to store fuel in a liquid phase, which significantly reduces the volume of storage required. To supply fuel in a liquefied phase, the intermediate step of converting the liquid fuel into the gaseous phase is required. The best version in this case is the choice of fuel, which evaporates due to entering the fuel conveyance means of the rotor and expansion, at which the boiling point of the fuel begins to exceed the ambient temperature due to a drop in pressure due to expansion. In this case, no additional energy is required to transfer the fuel to the gaseous phase. If the fuel boils at temperatures of between -60 and - 0 degrees C, then for its evaporation, it is enough to inject fuel from the tank through the liquid fuel conduit into a cavity with a larger volume than the volume of the fuel conduit. In this case, the fuel evaporates naturally and in the process expands and cools. In versions using fuel that evaporates at temperatures above 0 degrees C, forced evaporation of the fuel by heating from an external heat source is necessary. This can be, in a particular case, electric heating.

The place of injection of liquefied fuel into the chamber with subsequent expansion and evaporation can be positioned anywhere within the rotor body, but it must be optimized so that the time and distance as the fuel moves to the end of the rotor is sufficient for the gaseous fuel to receive, under the action of centrifugal force, an optimal pressure level in view of engine operational parameters.

As fuel options, one preferred choice includes liquefied hydrocarbon fuel (LPG) (the density of LPG is 250 times higher than that of gaseous hydrocarbon at boiling point), liquefied dimethyl ether (the density of liquefied ether is 315 times higher than that of gaseous at boiling point), liquefied hydrogen. The use of liquefied hydrogen requires a special cryogenic storage technology and is not safe, because a mixture of hydrogen and air is explosive under natural environmental conditions from the weakest source, since a spark with energy of 17 microjoules is sufficient to initiate an explosion. Thus some very special purpose versions of these inventions may include use of liquid hydrogen, but it is to be considered a rare exceptional case.

A most preferred gaseous fuel for subsequent detonation combustion is a hydrocarbon fuel. Its advantages are determined by its low cost, high availability, ease of storage in a liquefied state and subsequent use. Also, the advantage of some hydrocarbon fuels is that it evaporates at temperatures of -50 - 0 degrees C, which is a natural operating temperature of this method, and additional energy consumption is not required for its evaporation. Therefore, in best anticipated versions of these methods one most preferred fuel is liquefied petroleum gas (LPG).

In one particular version of these methods, fuel is supplied from a reservoir in which it is stored in a liquefied phase under a certain excess pressure above atmospheric pressure into a larger cavity. The composition of the fuel affects the operating temperature range at which this process works and depends on the boiling points of the gases included in the mixture. Also, the pressure in the storage reservoir depends on the composition of the fuel, which maintains the two-phase state of the fuel in the reservoir and allows optimal use of the volume of the reservoir for its storage at a wide range of temperatures of the process and its reliable supply to the system.

For particular versions of these methods, various types of propanes, butanes and their mixtures can be used. Propane is the optimal choice for operating the process in a wide range of operating temperatures from -50 to +20 degrees C as the pressure of saturated vapors of propane is higher than that of butane and this ensures its sufficient evaporation at low temperatures, which is especially important when the rotor is operating as a propeller of an aircraft at high altitudes. However, at high operating temperatures, the proportion of butane in the mixture must be increased to prevent high overpressure of the gas fuel mixture during storage at high temperatures and when the aircraft is at low altitude or on the ground.

After fuel is introduced to the fuel conveyance cavity from the fuel supply, the liquefied fuel expands and evaporates. This stage leads to a significant expansion of the volume of propane when transferring from the liquefied to the gaseous phase up to 250 times or more.

### 2. Mixing gaseous fuel with oxidizer into mixture

Mixing of gaseous fuel with oxidizer may take place before or after fuel is conveyed through the rotor to the rotor tip. Fuel and oxidizer is mixed together to form a mixture that is detonatable. Since the mixture of gaseous fuel and oxidizer in most cases is not only capable of detonation, but detonation hazardous, detonation may occur before the mixture is injected into the combustion space. The best version for the place of the mixing step in the described method of rotation of the rotor is to place it as close as possible to the moment of detonation of the mixture at the detonation space. Pressure, density and feed rate of the gaseous fuel and oxidizer must correspond to the design of the engine so as to provide the ratio of fuel and oxidizer in the mixture required for a stable detonation process.

Mixing with gaseous fuels requires an oxidizer. For the method described in this invention, any method of supplying an oxidizer to the space for mixing with a gaseous fuel is considered part of this invention. For high-quality mixing, the oxidizer in the space of mixing with gaseous fuel must be gaseous. This is especially important if the centrifugal force acts on the rotor rotating with the tip jet engine, which, in the case of a significant difference in the density of the fuel and the oxidizer, can cause stratification of the mixture, deterioration of its homogeneity and, as a consequence, reduction of its detonation capacity. In case of similar gaseous phases of fuel and oxidizer, the main requirement is that the oxidizer pressure should correspond to the fuel pressure to cause optimum for stable detonation ratio of fuel and oxidizer mixture. Thus, when using this method, the fuel pressure when entering the detonation engine must correspond to the method of its operation, its design and the conditions for supplying the oxidizer.

The gaseous oxidizer can be supplied in a variety of ways. In versions wherein oxidizer is supplied from a reservoir where it is stored under pressure, in addition to the initial pressure in the reservoir, the pressure of the oxidizer can be additionally increased via pumping by a compressor. It can be a liquefied oxidizer that comes from the reservoir and evaporates beforehand in the conveyance system of the oxidizer. It can also be a gaseous oxidizer that is supplied from a pressurized reservoir. All these options are included in the invention.

The most preferred oxidizing agent is oxygen. Liquid oxygen may be evaporated and passed into a rotor oxidizer conveyance path in some versions.

The most preferred way of using oxygen as an oxidizing agent is to use air. Air is readily available in the environment and its density for use in detonation-suitable mixtures in hydrocarbon fuels is sufficient at significant altitudes within 8000 m above sea level.

In the case of using air as an oxidizer, there can be several options for the air supply step. Air can be received from the atmosphere directly into the engine through the air intake located as part of the engine. This direct-flow method is used in ram jet type engines. Air pressure is provided by the speed of the rotor and the engine at the tip of rotor, which determines the speed of the air intake on this engine. However, this method of air supply has a disadvantage associated with the fact that during the rotation of the rotor, the air intake enters the zone of detonation products from the engine itself or another engine located at the tip of a similar rotor of the same length, which is preferred options for creating a balanced system of rotating rotors. Combustion products mix with air and enter the space where they are mixed with fuel. A mixture of fuel and air with an admixture of detonation products has a significantly lower detonation ability and the detonation process becomes unstable, which degrades the performance and reliability of this option of the rotor rotation method.

The preferred method is to place the air intake on the rotor at a sufficient distance from the jet engine to avoid detonation products entering the air intake during the rotation of the rotor.

It may be one or a plurality of air intakes. Location of air intakes can be in any location on the of rotor length, but one preferred choice is air intake in the root of rotor or around the rotor axes. Such arrangements enable use of one air intake for several rotors rotating on the same axis. With this position of the air intake, the possibility of detonation products getting into it is completely excluded. The reliability of this solution is complemented by the simplicity of the design of the air intake common to several rotors.

When the rotor is turning, air introduced in this way will be compressed as it passes toward the rotor tip due to centrifugal force. It is preferred method because it propose the correspondence in between pressures of gaseous fuel and oxidizer which are depended from centrifugal forces from rotated rotor.

Fuel is cooled during evaporation in case of usage of liquefied fuel which is introduced to the conveyance path. When centrifugal force is used to supply oxidizer and fuel to a jet engine, an increase in the relative density of the oxidizer may be required to match the ratio level of the oxidizer and the fuel. For this, in one option of the method, the step of cooling the oxidizer is used. One of the options for such cooling is the transfer of heat from the oxidizer to the fuel through a heat transfer medium. In some versions this may be done via a heat exchanger construct such as cooling fins for example. In this way, cooling generated by evaporation of fuel is passed to the oxidizer and visa-versa heat from the oxidizer is passed to the gaseous fuel. In the most preferred particular case of simultaneous injecting of fuel and oxidizer using the centrifugal force described above, the fuel and oxidizer pass through cavities associated with the rotor and having consistent lengths. In this case, these cavities can have a common heat-conducting medium, which ensures the passage of heat from the oxidizer into the fuel. Because the fuel expands and cools during evaporation, then the oxidizer is also cooled due to this.

Optimum ratio of fuel and oxidizer in mixture is depended from mixture temperature, used fuel and oxidizer and method of detonation. So, in particular case for mixture of gaseous hydrocarbon fuel and air with range of temperature 20-110 C degrees ratio for detonation in tube should be in limits 2-10% of hydrocarbon fuel in mixture. In some versions, fuel and oxidizer are mixed in a special chamber just prior to being injected into the engine combustion chamber, and in other versions, mixing is done during the injection step whereby fuel and oxidizer are separately injected in a manner that brings about mixing just prior to detonation. In both cases, fuel and oxidizer delivered through the rotor at a preferred pressure and gas velocity are mixed together in proportions that create a mixture that supports a combustion reaction that is characterized as a detonation reaction.

In treating prior to mixing, the gaseous fuel is made subject to processes that increase its detonation ability. Treating is way of changing of physical or chemical qualities or properties of fuel. These steps may include heating the fuel, increasing the speed of its supply in order to increase the kinetic energy, mixing the fuel with prescribed additives, which will further increase its detonation ability, among other steps that improve the ability of the fuel to support a vigorous detonation reaction.

Similarly, special prescribed treatments may be applied to the mixture of fuel and oxidizer prior to detonation to further improve the ability of the mixture to detonate. Treating is way of changing of physical or chemical qualities or properties of the mixture of fuel and oxidizer. After mixing the fuel and the oxidizer, the mixture,
- may be passed through a magnetic field to cause ionization;
- increasing the velocity of the mixture gas in order to increase its kinetic energy; and
- supplying the mixture to a pre-combustion chamber for partial combustion of the mixture; among other processes that improve the ability of the mixture to undergo the detonation reaction more efficiently.

In one preferred option of increasing the velocity of the mixture is injection to the combustion space through a narrow nozzle. At this step, the pressure of the gaseous fuel mixed with the oxidizer is converted into an injection speed, which can be extremely sonic. This mixture has a lot of kinetic energy, which is used to heat the mixture. In a particular case, this can occur due to the meeting of mixture flows in a certain zone and its deceleration, during which the mixture is heated. Such heating further improves detonation ability of the mixture. All these steps are aimed at bringing the mixture of fuel and oxidizer closer to detonation excitation.

To get a stable detonation process, in addition to ensuring the detonation ability of a mixture of gaseous fuel and an oxidizer, it is also necessary to ensure maximum mixture homogeneity. This is important because the detonation wave rapidly spreads through the detonatable mixture only if the quality of the mixture is the same and sufficient to maintain this spreading. In the opposite case, the detonation wave may weaken or even decouple. Various methods are possible to obtain a higher homogeneous mixture of gaseous fuel and oxidizer. One of them is the forced mixing of the fuel and the oxidizer by mechanical means, for example, by a rotating fan. Another way is to use a mixing chamber for mixing, into which flow of gaseous fuel and oxidizer are supplied in such a way that their chaotic windings provide uniform mixing. It is most preferred to deploy a process that does not require additional energy consumption. For example, to distribute the flow of gaseous fuel and oxidizer in the mixing chamber space by feeding them through narrow slots that are located next to each other. In this case, the distributed streams are mixed as homogeneously as possible due to the uniform flow throughout the entire volume of the mixing chamber. In this case, the methods of supplying oxidizer for mixing with gaseous fuel can be various and will be discussed in this description in separate paragraphs herefollowing. All of these methods are included as alternative versions of the invention.

### 3. Detonating the gaseous fuel and oxidizer mixture to form jet stream

The mixture of gaseous fuel and oxidizer before detonation is preferably in a state very close to detonation excitation. The detonation of the mixture occurs in the combustion space. Detonation can occur as either continuous detonation or as pulse detonation.

The method of operation of the detonation engine can be any of a large number of possible methods, but it must be operable at the pressure levels of the gaseous fuel that can be provided by the centrifugal forces of the rotating rotor. Any method of detonation can be applied in this invention and is its particular case. Depending on the speed of propagation of the detonation wave in the coordinate system associated with the engine, stationary detonation, rotating detonation, when the detonation is stationary in the rotating coordinate system, transient detonation and pulse detonation. Accordingly, detonation engines with continuous detonation (CDE), rotary detonation engines (RDE) and pulse detonation engines (PDE) can be created as included versions of this invention.

Detonation can be excited or triggered in various ways that increase the pressure and or temperature of the mixture to critical levels for detonation:
- under the influence of a shock wave;
- under the mechanical influence of moving structures (pistons, cavitators, et cetera);
- under the influence of a low pressure wave;
- under the influence of a physical heat impulse from various sources (spark plugs, laser, et cetera) and any other.

A great plurality of alternative methods are possible for triggering detonation and the essence of the invention is not dependent upon either of them. As such, any means of triggering detonation are to be considered included variants of these inventions.

One preferred option to make the process the most economical, efficient and reliable is operating the engine in a pulse detonation mode. Pulse detonation process is a sequence of detonation cycles that are repeated at a specific frequency. The detonation cycle includes the following main steps:
- injection of fuel and oxidizer into the place of detonation,
- excitation of a mixture of fuel and oxidizer to a level close to the level of spontaneous detonation,
- the occurrence of detonation of a mixture of fuel and oxidizer,
- propagation of a detonation wave to the entire detonation space and cessation of the supply of fuel and oxidizer,
- exhaust of detonation products,
- the occurrence of a low pressure wave directed from the exhaust site to the detonation space and
- next cycle of injection of fuel and oxidizer

Detonation space is usually formed as detonation chamber. Injection of fuel and oxidizer into the combustion chamber may be separately or in mixture as it is described. If fuel and oxidizer is injected separately they are mixing inside combustion chamber. Excitation of mixture can be provided by any way including already described. In a pulse detonation mode the best way is when detonation of fuel and oxidizer mixture is excited by resonance processes of the combustion which is possible with special mechanical designs a combustion chamber and exhaust nozzle.

Cessation of the supply of fuel and oxidizer in combustion chamber may be provided by any way including mechanical valve or gas dynamic way which is stopped fuel and oxidizer supply by high pressure of detonation shock wave after occur of detonation, which is lock fuel and oxidizer out of combustion chamber.

To ensure the reliability of pulse detonation, it is preferred option to use a detonation initiator that triggers detonation in one of the ways described above. One preferred detonation initiator is arranged as source of a physical impulse such as a shock wave which has enough energy for detonation initiation. An important difference of between physical impulse detonation initiator and other means of fuel and oxidizer mixture excitation is that it is short in time, focused on detonation space and used in moment when fuel and oxidizer mixture is nearest detonation capacity to self-detonation. Preferred options of the detonation initiation method for efficiency and reliability are methods without use of additional energy and without using mechanical movement.

Low pressure wave is important part of cycle as lets injecting of fuel and oxidizer in case of gas dynamic way of injection management. Same time low pressure wave is exciting of fuel and oxidizer mixture with goal to increase its detonation capacity.

Of primary importance in these methods is the notion that detonation results in the rotation of the rotor. To drive the rotor about a rotation axis, the detonation products must be mechanically redirected into an organized and directional jet stream of engine exhaust. The natural configuration of a detonation reaction tends to be a substantially spherical expansion of gases outward from a detonation zone. Thus, to form a preferred directional jet stream, these expanding gases are reflected or otherwise redirected from shaped mechanical elements that result in a stream substantially flowing along a system axis. To further improve directionality of the jet stream and tune its physical nature, these methods include further shaping the jet stream with an exhaust nozzle. One of the best ways to use this method is combustion chamber in form of reflector which participates in forming of jet stream by reflecting and redirecting of detonation products in common preferred direction.

### 4. Rotating the rotor by thrust force of the jet stream

The jet engine generates a jet stream with the required thrust, which is substantially linearly directed. The thrust direction depends on the engine design and, as described above, is determined by the designs of the combustion chamber and exhaust nozzle. In order to bring the rotor into rotation as efficiently as possible, the engine is located at the rotor tip and is oriented as much as possible orthogonal to the rotor radius and as much as possible in the plane of the rotor rotation.

The rotor can have a various designs depending on the application. If the rotor is used an aircraft propeller, then it has the shape of a blade. In some propellers, the blade may change the thrust force of the propeller by changing the angle of attack. If the engine is located at the tip of such a blade and is rigidly connected to its structure, then the thrust vector of such an engine changes direction along with the angle of attack of the blade and deviates from the plane of rotation of the rotor. In this case, the efficiency of rotation due to the thrust of the jet engine decreases depending on the value of the angle of deflection of the thrust wind from the plane of rotation of the rotor. The best version in this case is the propeller design, in which the blade rotates around the supporting structure inside the rotor, rigidly fixed on the axis of rotor rotation and remains stationary when the blade angle of attack is changed. In this case, the jet engine is attached to this structure and its orientation during the rotation of the blade remains unchanged, and the rotor rotation force when the thrust vector coincides with the maximum rotor rotation plane. All of these variations are part of the described invention.

Since the thrust force of the jet for the most efficient rotation must be applied to the tip of the rotor, this must be taken into account in its design in terms of strength of rotor and its joint with jet engine.

When using a rotor as an aircraft rotor in a helicopter configuration, the size and weight of the jet engine at the tip of the rotor is important because high weight greatly increases the centrifugal force acting on the engine joint to the rotor. On the other hand, the presence of additional weight at the tip of the rotor blade allows, during its rotation, to store the kinetic energy of inertia of rotation, which is useful in case of engine failure and the use of autorotation as a method of emergency landing of an aircraft. All of these aspects should be taken into account when developing jet-driven rotor designs based on the disclosed invention.

### 5. System startup

Prior to reaching a steady operational state, the rotor is stationary or at a rotational speed insufficient for supporting proper pressure of fuel and oxidizer for correct mixing. In this state, the rotor does not yet produce sufficient centrifugal forces for proper conveyance of gases in the rotor conveyance means. Centrifugal forces are absent or small, in the version wherein centrifugal force are used to inject the oxidizer, the initial pressure of the oxidizer at the inlet to the jet engine is insufficient. To provide the pressure required for mixing with the fuel and the detonation ability of the mixture until the oxidizer is supplied into the rotor cavity, a step of injecting the oxidizer is used, provided by an external startup compressor or other means of increasing oxidizer pressure. In this case, the pressure of the gaseous fuel after evaporation in the chamber will nevertheless be sufficient to mix with the oxidizer and form a mixture that is suitable for detonation and allows the detonation jet engine to initiate. In the event that air is used as an oxidizer, after the rotor speed is established and the centrifugal forces increase to a level that allows the oxidizer pressure to be sufficient for stable operation of the detonation engine, the step of switching the air supply from a source of increased pressure, for example, the compressor, to supply from the air intake.

### PREFERED EMBODIMENT OF INVENTION

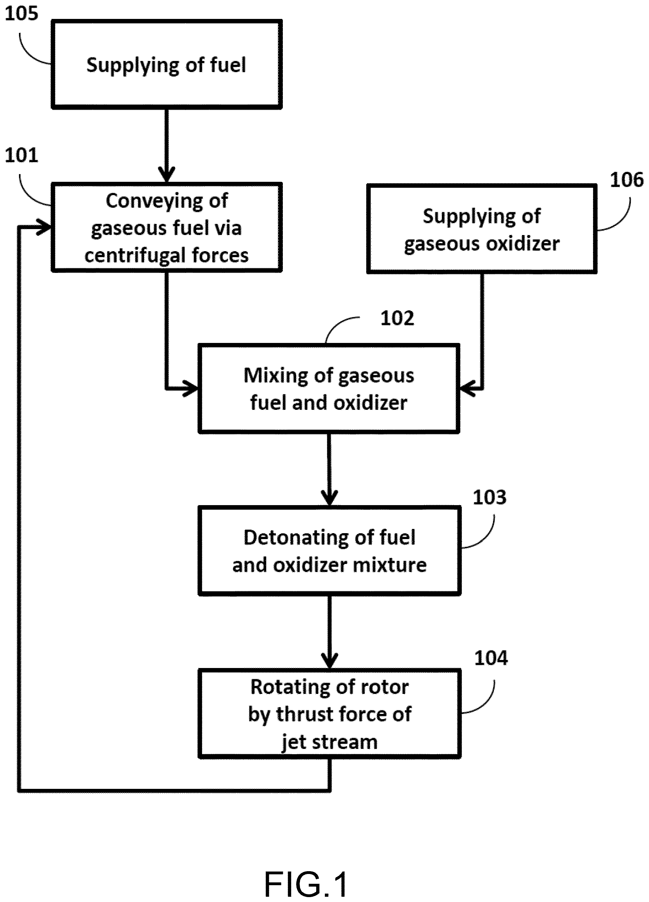

Methods of operation of jet driven rotors have the main steps, which are shown in FIG. 1. These steps include:
conveying gaseous fuel (101) via centrifugal force of a rotating rotor towards a combustion space;
mixing gaseous fuel with a gaseous oxidizer (102);
detonating the gaseous fuel and oxidizer mixture (103) to form a jet stream and
rotating the rotor by thrust force of the jet stream (104).

The best version of this method was implemented as a method of propulsion system of an aircraft, for which the rotor was used as the main propeller of its propulsion system. In this case, the rotor has the shape of propeller blades. The propulsion force of the aircraft depends on the angle of attack of the blades, the dimensions of the blades and the rotation speed of the propeller. The angle of attack and the dimensions of the blades determine the force of the air flow resistance and together with the rotational speed determines the force required to rotate a given rotor at the required rotation speed. To rotate the rotor, this method uses the thrust force of a jet stream produced by an engine located at the tip of the rotor. Accordingly, for the rotor to rotate with the given characteristics, a sufficient level of thrust force of jet stream must be generated.

A detonation engine is used to generate jet stream. Its efficiency depends on its design and method of operation, which is based on detonation combustion of a mixture of fuel and oxidizer at the combustion space. Requirements for the thrust force of the engine, in conjunction with its design and method of operation, determine the requirements for the mixture of gaseous fuel and oxidizer entering the space of detonation. These characteristics include the feed rate of the mixture, the ratio of fuel and oxidizer, the homogeneity of the mixture, the level of its detonation excitation, and the effect on the mixture of external physical impulses, which all together make it possible to obtain a stable detonation process. The feed rate of the mixture and the ratio of fuel and oxidizer in the mixture depend on the engine design and the feed rate, density and pressure levels of the fuel and oxidizer when mixed. When centrifugal force is used for conveying of fuel toward the engine, the density and pressure of the fuel depends on the design of the fuel conveyance system and on the centrifugal force that is used to deliver fuel to the engine. The centrifugal force acting on the fuel in the rotor fuel conveyance system, in turn, depends on the dimensions and speed of the rotor. Thus, all main steps of the method are interrelated and interdependent, and also significantly depend on the design of the rotor and the detonation engine.

In some versions, conveyance of gaseous fuel via centrifugal forces is preceded by a step of supplying fuel (105) from a fuel source such as a pressurized reservoir. In addition, some versions include an optional step followed by the supplying fuel step that includes modulation of the quantity of fuel in a control step (208).

The step of mixing the gaseous fuel with the oxidizer (102) is further defined with more precision as being preceded by a step of supplying the oxidizer (106).

In other important versions, another optional step includes a step of treating gaseous fuel to increase detonation capacity (203).

Another optional step which may follow mixing of the gaseous fuel and oxidizer is treating of the mixture to increase its excitation to achieve conditions under which improved detonation occurs (200).

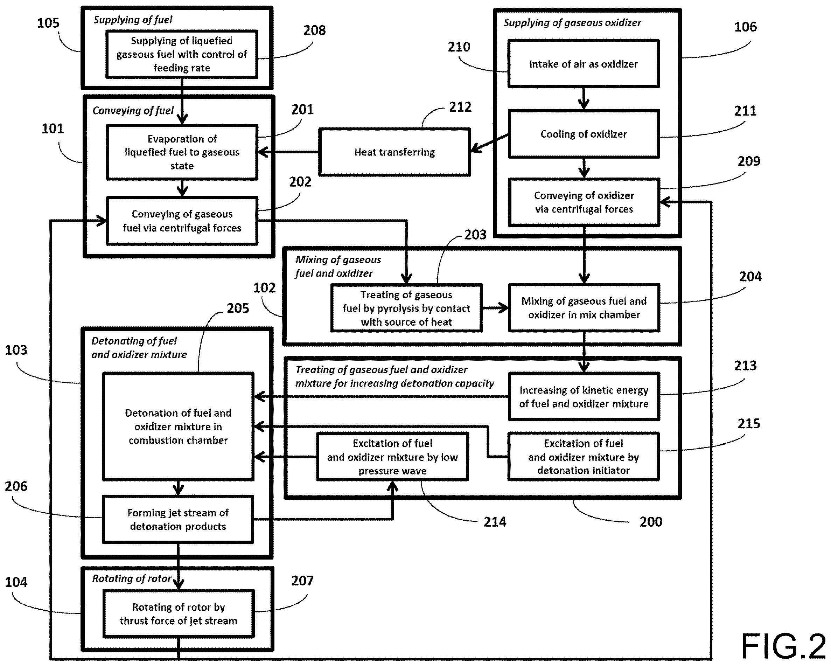

One preferred method embodiment diagram with all steps is shown in Fig.2. In this diagram, primary steps are broken down into particular versions of preferred sub-steps. As a result, the sub-steps are combined into the main steps by blocks indicated by heavy or bold lines.

### Conveying gaseous fuel

A first primary process step of conveying gaseous fuel is an initial step of preferred methods. A primary objective of this step is supplying fuel to the engine with required levels of feed rate and pressure as described above.

The rotor rotates due to the thrust of the detonation engine's jet stream. The best location for the engine as source of jet stream to rotate the rotor most efficiently at its tip. The location of a fuel reservoir inside the rotor is possible, but the best location of a fuel reservoir, provided there is a significant amount and appropriate weight in a stationary part of the aircraft. In this case, the fuel conveying system is structurally combined with the rotor. Fuel is supplied (105) to this system through a fuel conduit is arranged along the rotor axis to a junction where the rotor root mates with its axis. The fuel conveying system allows fuel to move freely from the root of the rotor toward its tip in a radial direction (202). In this case, an important requirement for the system is a minimum resistance to the flow of fuel, which allows the most efficient use of centrifugal force from the rotation of the rotor to motivate fuel to the engine. The fuel pressure at the end of the rotor depends on the pressure under which the fuel enters the fuel conveying system from the reservoir and on the action of centrifugal force. The centrifugal force acting on the fuel is greater, the faster the rotor rotates, and the force increases as the fuel moves away from the axis of rotation. To apply this method, the design of the fuel supply system in the rotos calculated in combination with other system elements based on the laws of gas dynamics such that the fuel pressure at the engine cooperates with the engine performance parameters.

The use of a fuel reservoir is most effective in an aircraft when the fuel is concentrated in the smallest volume. In this invention, gaseous fuel is required at the jet engine, but the best solution for the fuel reservoir is to use fuel in a liquefied state, which makes it possible for the fuel to be stored in a small volume. A consequence of this choice is the need for fuel vaporization (201) on the way from the reservoir to the engine. This can happen in various places, for example in the reservoir itself, inside the fuel conveying system, or directly upon entering the engine. Evaporation occurs when the fuel reaches a specific combination of pressure and the boiling point of the fuel corresponding to the pressure. For this purpose, it is possible to heat the liquefied fuel using an external heat source, but the best solution in terms of efficiency is to inject liquid fuel from a small tube into a larger cavity, in which the fuel pressure drops rapidly and the boiling point of the fuel rises above the ambient temperature, after which the fuel evaporates and expands and its pressure drops.

One best way to implement this method is to supply liquefied fuel to the cavity of the fuel conveying system in the rotor near the root of the rotor, which allows, due to the action of the centrifugal force, to raise the pressure of gaseous fuel before it is fed into the engine to a level necessary for the stable operation of the method.

In the case of operation of an aircraft propulsion system, it is required to control to the propulsion power of the system. Such a change is obtained as a consequence of a change in the thrust force of the jet engine, which requires changing the ratio of fuel and oxidizer in the mixture. This proportion depends on the rate of fuel supply to the place where the fuel is mixed with the oxidizer. To change this level, a step is needed at which the rate of the supplied fuel changes by adjusting the section of the fuel line by for example usage of flow rate valve (208). Fuel flow rate can be continuously manipulated while the engine is operating. One best option for controlling the propulsion power is to regulate the rate of fuel introduced into the fuel conduit prior injecting to conveying system in the rotor. This sequence of step is due to the fact that the pressure of the fuel and the oxidizer must be coordinated with each other, and this is achieved due to the fuel and oxidizer conveying systems working in concert, which will be described further in section of "Oxidizer supplying" step.

In preferred versions, liquefied petroleum fuel (LPG) is used as fuel. LPG is relatively inexpensive and readily available. A best composition of LPG is preferably propane. This is due to the advantage of propane over other gaseous hydrocarbon fuels in calorific value and boiling point, which allows the method to operate at low ambient temperatures (up to -50 degrees) commonly found at high altitudes where aircraft may fly. The LPG enters the fuel conveyance system inside the rotor at the root in a place proximate to rotor axis. Fuel may be supplied (105) from a reservoir via relatively narrow conduit such as a fuel supply pipe or tube which injects fuel into the fuel conveyance system inside rotor. To promote efficient evaporation (201), the space of the fuel conveyance system has large dimensions in comparison with the fuel pipe. Accordingly, at this moment, LPG expands more than 200 times and evaporates into a gaseous state. The design of a fuel conveyance system is optimized for promoting the process of evaporation.

### Oxidizer supplying

Simultaneous with conveyance of gaseous fuel, the oxidizer is also supplied to the engine (5). In some versions, an oxidizer can be supplied from reservoir. In this case method of oxidizer supplying is similar with fuel conveying step which was described in previous section.

In preferred versions, air is used as oxidizer. Air supplied from the surrounding environment, in which there is a sufficient amount of oxygen in a mixture with other gases. Air is easy to get from environment in any time and any place. The oxygen requirement also limits the altitude for using this method to about 8000 m above sea level.

Air can be supplied by an air intake (210) which can be located in various places. The objective of the oxidizer supplying step is to supply oxidizer in parallel with gaseous fuel with level of rate and pressure which is optimal for mixing. Optimal propane and air pressure levels at the tip of rotor and their ratio depend on the method of operation of the engine and its particular physical designs. In one preferred method, in the cavities at the tip of the rotor, the propane pressure is preferably in the range of 2-7 atm, and the air pressure in the range of 3-10 atm, with the ratio of the air pressure exceeding the propane pressure by about 1.5 times. This ratio of propane and air pressures, combined with their density which is depended from their temperature, allows a mixture to be obtained during mixing (204) in the optimal ratio of propane and air. In the most preferred method for achievement of best conditions of propane and air for its mixing in mixture with high detonation capacity ratio in between propane and air is in the range of 5-10% fuel and 90-95% air.

The pressure of propane at the exit of fuel conveyance system is dependent on rotor rotation speed and its generated centrifugal forces (202). The best way to achieve correspondence of pressure of propane and air at the entrance to engine is to use centrifugal forces that direct air toward rotor tip as well (209). This version uses centrifugal forces only and doesn't spend any energy for pumping of oxidizer which increases total efficiency of method.

In preferred versions, simultaneous with fuel supplying, air flows through an air intake into air conveyance system (209), located inside the rotor. A preferred location for the air intake is on the axis of rotor, because it is possible to use one air intake for a plurality of rotor blades. But air intake can located in alternative locations and these versions are additionally considered included with this invention. Preferred versions include a rotor having a minimum rotation speed which is sufficient to create enough centrifugal force to provide the pressure of the air at the rotor tip inside air conveyance system, which is required for the method to operate (29). This level of pressure depends from particular method structure and design of rotor and engine devices. Finally pressure should be suitable for preparation of detonatable mixture of propane and air and provision of mixture detonation. For preferred versions minimum air pressure should be at about 1.5 atm.

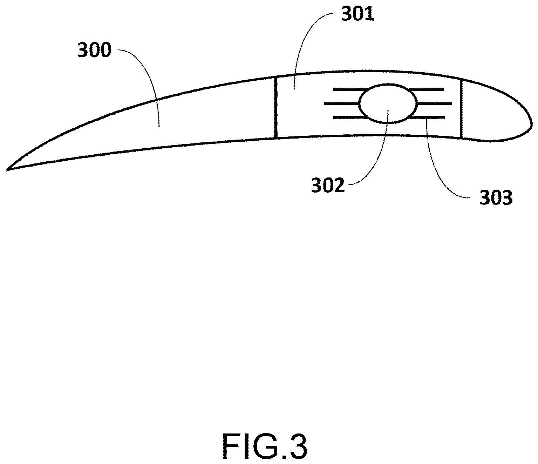

For versions in which a rotor is used as propeller for aircraft propulsion, the cross-section of the rotor blade design is shown in Fig.3 The fuel cavity is inside the air cavity and both are inside the rotor.

### Heat transferring

To obtain a ratio between propane and air in the mixture in the range of 5-10% propane and 90-95% of air obtained due to the action of centrifugal force, the ratio of pressures at the outlet of the propane (202) and air (209) supply systems may be insufficient and the share of air may be less than necessary for stable process operation. For this purpose, an increase in air density is required. The best way to increase the density of air in the air conveyance system is to cool it (211). At the same time, for the overall high efficiency of the system, the cooling preferably does not consume additional energy.

In the moment of LPG supplying to fuel conveyance system it expands and evaporates. Evaporation of propane is accompanied by cooling.

The design of the wall of the cavity in which the fuel is located promotes efficient heat exchange (212) with the cavity of the air conveyance system where the air is located. Thus, the air is cooled and this increases its density. The propane gas is then heated which is also useful for further treating of propane for increasing of its detonation capacity. Fins are used for improvement of heat transferring in between cavities of fuel and air conveyance systems because they are increase of surface area between cavities of conveyance systems.

For efficient transfer of heat from air to fuel, it is important that thermal coupling between the air path and fuel path is maximized. Because the supply of propane and air through their conveyance systems inside the rotor occurs in parallel, then the design of systems preferably provide heat-conducting contact between the systems along the entire length of the rotor. The best solution for such heat transfer is to place the fuel conveyance system (302) inside the air conveyance system (301) along the entire length of the rotor (30) and also along the entire length to ensure heat transfer by using fins (303) which increase the surface area. The section of the rotor of this design is shown in Fig. 3.

### Mixing of gaseous fuel and oxidizer

Gaseous fuel and oxidizer conveyance systems independently supply fuel and oxidizer to an engine located at the tip of the rotor to be mixed there (204).

For efficient engine operation, the preferred methods use fuel conditioning steps of treating gaseous fuel to increase detonation capacity prior mixing gaseous fuel with oxidizer. There are several such methods of treating fuel and all of them may be included in various alternative versions the invention. One best version of this step is propane pyrolysis (203), which occurs when the fuel flow is heated in contact with a hot surface. The initial stage of this step is the injection of propane into a pyrolysis cavity, which has a hot surface. As a heat source for such a surface, any source that is a hot part of the engine structure or an external, for example electric, heater can be used. The preferred method is heating the propane flow with the heat of the combustion chamber wall. For optimal heating, it is important that the fuel flow is in contact with the wall for an extended time. Various methods also may be used to increase the duration of the contact between flowing fuel and the heat providing surface. For example, this can be brought forth as use of coiled fuel conduits or directing a fuel flow along the surface by mechanical structures such as fins, et cetera. In one preferred method, propane is injected from a nozzle into a pyrolysis cavity so that the flow of fuel passes around the wall of the combustion chamber, spiraling, which increases the flow path length along the wall and the thus time of propane heating and the efficiency of its pyrolysis. Pyrolysis produces a variety of chemicals, including hydrogen, whose mixture has a much higher detonation capacity than pure propane. This process has high efficiency, because doesn't consume any additional energy and uses heat which is generated by combustion of fuel and oxidizer mixture in combustion space. Another benefit of heating and pyrolysis of fuel flow is cooling of combustion chamber walls and keep thermal balance of whole construction which is important for reliability of process and robustness of construction which uses for described method.

In parallel with this process, air is supplied to a mixing chamber where it can be mixed with fuel (204). One best way is injecting of air in special cavity with purpose to prepare the air flow for injection into the place where it is mixed with fuel. Therefore, the design of this cavity at the outlet to the mixing point must correspond to the design of the propane pyrolysis cavity in such a way that after injection into the mixing place, a highly homogeneous mixture of fuel and air is formed, ready for injection into the combustion space. To ensure this uniformity, it is important not only the spatial distribution of the fuel and air flows, which are provided by the design of the corresponding cavities, but also the ratio of the fuel and air pressures. In addition to the homogeneity of the mixture, the ratio of the amount of fuel and air in the mixture is important, which will ensure the stability of its detonation. As described, in the most preferred method, this ratio is in the range of 5-10% fuel and 90-95% air.

The space where fuel and air are mixed depends on the design of the engine and can be either directly in the combustion space or outside it. In a preferred method, this takes place in a special mix chamber. When injected into the mix chamber, fuel and air are mixed in chaotic contours and form a highly homogeneous mixture. When mixing fuel and air directly in the combustion space, it is more difficult to achieve high uniformity of the mixture.

### Treating of gaseous fuel and oxidizer mixture for increasing detonation capacity

In preferred methods a mixture of fuel and oxidizer may be treated to increase detonation capacity or excite it to a state which is close to self-detonation. For this purpose it is possible to use various steps as the mixture is entering the combustion space. The best mixture treatment steps don't consume additional energy and uses internal energy of processes which are naturally happening in described methods.

In some preferred versions of treating the mixture:
- increasing of kinetic energy of fuel and oxidizer mixture (213);
- excitation of fuel and oxidizer mixture with detonation products low pressure wave (214) and
- excitation of fuel and oxidizer mixture by detonation initiator (215)

One best way to increase kinetic energy of fuel and oxidizer mixture (213) is injecting mixture into the combustion chamber through a supersonic nozzle. At this step, the mixture acquires a high speed and kinetic energy. As a result of such injection, depending on the design of the combustion chamber and the injection system, kinetic energy can be converted into thermal energy to heat the mixture in order to further increase its detonation capacity. In the preferred version an annular nozzle is used, located along the perimeter of an annular section of the combustion chamber, the shape of which is a body of rotation. It can be a tube, hemisphere, or any other shape with an axis of rotation. This nozzle directs the mixture at high speed toward the axis of the combustion chamber. In a place close to the axis of the combustion chamber, the mixture flow meets in the center and is compressed. Due to this, the kinetic energy of the flow is converted into thermal energy, which heats the mixture and further increases its detonation capacity.

Excitation of fuel and oxidizer mixture by low pressure wave (214) and detonation initiator (215) in preferred versions occur as a result of cyclical detonation during the stage of detonation process with usage of detonation products from a previous cycle. These steps are further described in the following section of 'Detonation of fuel and oxidizer mixture'.

The common result of fuel and oxidizer treating step is getting a mixture of fuel and oxidizer with a certain ratio and a high level of homogeneity and excitation, close to the conditions for the occurrence of spontaneous detonation.

### Detonating of fuel and oxidizer mixture

The detonation process of fuel and oxidizer mixture (103), which can be any of various possible alternatives. All of them are to be considered included alternative versions of this invention.

In one preferred version, detonation (205) occurs in combustion chamber. The best method is pulse resonant detonation, which provides stable cyclic detonation. As a result of detonation, a shock wave and a detonation wave are generated, which ensure rapid detonation combustion of a mixture of fuel and oxidizer in the combustion chamber and the formation of combustion products with high temperature and pressure. These combustion products are directed to the exhaust nozzle as jet stream (206) and generate thrust from their high kinetic exhaust energy.

At the same time, a vacuum wave is formed in the exhaust due to the rapid drop in the pressure of the combustion products after leaving the exhaust nozzle, which provides a low pressure in the combustion chamber and conditions for the injection of a new portion of the fuel and oxidizer mixture and its excitation (214).

To increase the stability of the occurrence of cyclic detonation, a detonation initiation step (215) may be included in one preferred version as part of treating of fuel and oxidizer mixture. There are many alternative ways to initiate detonation and all of them are considered included variations of this invention. One most preferred method of initiation is the following method. After the formation of a shock wave of detonation products, some of them are directed into a tube of a certain length, located so that it is open in the area of the combustion chamber and closed on the other side. The shock wave of a small amount of hot combustion products is reflected from the closed end of this tube and returns to the combustion chamber at the place where the mixture of fuel and oxidizer is injected. The length of the tube is chosen so that this happens at the moment of the pulsating detonation cycle, in which a new portion of the mixture is injected into the chamber. The high speed and temperature of the combustion products of this shock wave excite the mixture of a subsequent cycle to cause its detonation. The diameter of the tube is selected in such a way that the amount of combustion products is sufficient to excite the detonation of the mixture.

Another method of detonation initiation step may be temporarily used in case if energy of shock wave isn't enough for initiation of detonation. For example, at the start-up of a pulse detonation resonance or in case if pulse detonation is interrupted by any external factor as period of low fuel supply rate or any another reason. In this case preferred version of detonation initiator is done via an external source of physical impulse such as spark plug. Management of spark plug operation is special procedure which is includes detection of interruption of pulse detonation resonance or launching procedure of start of rotor rotation.

The whole process of operation of this system enters into resonance and occurs due to the speed of detonation combustion (205) at an extremely high frequency. In the best embodiment of this method, the frequency is from 1,000 Hz to 15,000 Hz.

Simultaneously with detonation, due to the high temperature of the combustion products, the wall of the combustion chamber is heated. This heat is used in the propane pyrolysis step (203) described above.

### Rotating of rotor by thrust force of jet stream

The jet stream, which is formatted on prior step, has high speed and generates thrust force of jet engine, which is located at the rotor tip. The axis of the exhaust nozzle is directed in an orthogonal direction with respect to the radius of the rotor. Thrust force of the jet stream which is directed by this way rotates the rotor (207). A so-rotated rotor provides the emergence of centrifugal forces necessary to convey fuel and in best version of method air inside the rotor conveyance systems to the engine. These methods are closed and self-sustaining for continuous and stable work.

## Claims

1. Methods of driving rotation of a rotor with at least one jet engine comprising the steps:
- conveying gaseous fuel to a combustion space via centrifugal forces generated by the rotating rotor;
- detonating a mixture of gaseous fuel and oxidizer in the combustion space to produce a jet stream;
- rotating the rotor by thrust force of the jet stream.

2. Methods of claim 1, said 'rotating the rotor by thrust of the jet stream' step further comprises forming a jet stream with an orientation at a substantially orthogonal direction to a rotor radius whereby a reaction force generated by the jet stream drives the rotor to rotate about an axis.

3. Methods of claim 1, further comprising a step mixing gaseous fuel with an oxidizer to form a mixture.

4. Methods of claim 3, further comprising a step of treating the mixture of gaseous fuel and oxidizer prior to detonation of the mixture in the combustion space to increase detonation capacity.

5. Methods of claim 3, further comprising a step of treating a gaseous fuel prior to mixing with oxidizer to increase its detonation capacity.

6. Methods of claim 4, said "treating the mixture gaseous fuel and oxidizer" step further comprises a step of partially combusting the mixture.

7. Methods of claim 4, said "treating the mixture gaseous fuel and oxidizer" step further comprises increasing of kinetic energy of mixture by injecting this mixture radially inward into the combustion space from at least one of annularly disposed injector directed into a common detonation space.

8. Methods of claim 4, said "treating of mixture gaseous fuel and oxidizer" step further comprises excitation of the mixture by a detonation initiator whereby the detonation initiator is source of a physical impulse.

9. Methods of claim 4, said "treating of mixture gaseous fuel and oxidizer" step further comprises excitation of the mixture by low pressure wave formed by jet stream exhaust reflected back to the combustion space.

10. Methods of claim 5, said "step of treating a gaseous fuel" further comprises pyrolysis of gaseous fuel whereby pyrolysis occurs via contact with source of heat.

11. Methods of claim 1, said "conveying of gaseous fuel" is preceded by evaporating a liquid fuel to a gaseous state prior to subjecting the gaseous fuel to centrifugal forces that motivate gaseous fuel towards a mixing space.

12. Method of claim 3, said "mixing gaseous fuel with an oxidizer" step is preceded by conveying oxidizer to a mixing space via centrifugal forces generated by the rotating rotor.

13. Methods of claim 1, said oxidizer is characterized as environmental air which is drawn from an intake proximate to the rotor tip.

14. Methods of claim 12, said oxidizer is characterized as environmental air which is drawn from an intake between the rotor tip and rotor axis whereby air drawn at the intake is subject to centrifugal force while to being conveyed to the mixing space at the rotor tip.

15. Method of claim 12, further comprises transferring heat between a conveyance path of gaseous fuel and a conveyance path of oxidizer whereby heat transfer is provided thorough heat conducting structure common to said paths.
